# EUROPEAN PATENT SPECIFICATION

(11) **EP 4 542 405 B1**
(45) Date of publication and mention of the grant of the patent: **15.04.2026**
(21) Application number: 24207493.8
(22) Date of filing: 18.10.2024
(51) Int. Cl.: G06F 15/02

(54) **ELECTRONIC DEVICE, DISPLAY CONTROL METHOD, AND PROGRAM**
ELEKTRONISCHE VORRICHTUNG, ANZEIGESTEUERUNGSVERFAHREN UND PROGRAMM
DISPOSITIF ÉLECTRONIQUE, PROCÉDÉ DE COMMANDE D'AFFICHAGE ET PROGRAMME

(30) Priority: 20.10.2023 JP 2023180741
(43) Date of publication of application: 23.04.2025
(73) Proprietor: CASIO COMPUTER CO., LTD., Tokyo 151-8543 (JP)
(72) Inventor: OKUMA, Kentaro, Tokyo, 205-8555 (JP)
(74) Representative: Plougmann Vingtoft a/s

(56) References cited:
- JP-B2- 4 547 774

## Description

### Technical Field

The present disclosure relates to an electronic device, a display control method, and a program.

### Background Art

Some calculation devices called scientific calculators are capable of graphing and displaying a function formula (a calculation formula including a variable). For example, JP H09-185723 A discloses a technique of graphing and displaying any function formula easily in an appropriate size without examining settings of a coordinate range of a coordinate system on which a graph is to be drawn.

JP 4 547774 B2 discloses a graph display control device capable of displaying a graph in a picture by easy operation when the graph is off the display screen and a storage medium therefor. When the graph is off a picture display range, the graph display control device retrieves a pole of the graph within a prescribed retrieval range, and displays directional marks 4a-4d indicating the direction to the pole. Summary of Invention

### Technical Problem

However, in the graph display methods in the conventional calculation devices including the display method described in JP H09-185723 A, the graph may not be sometimes displayed within a display screen in a case where the graph is tried to be displayed in a state set with the ranges on both of the vertical axis and the horizontal axis. In these circumstances, it is difficult for a user of the calculation device to know the reason (cause) why the graph is not displayed and a coping method.

An object of the present invention is to make it possible to easily know a coping method in a case where a graph of an input function formula is not displayed.

### Solution to Problem

The present invention is defined by the independent claims. Preferred embodiments are defined by the dependent claims.

### Advantageous Effects of Invention

According to the above aspect, a coping method in a case where a graph of an input function formula is not displayed may be easily known.

### Brief Description of Drawings

Fig. 1 is a front view illustrating an exemplary external configuration of a scientific calculator according to a first embodiment.
Fig. 2 is a block diagram illustrating an exemplary configuration of an electronic circuit of the scientific calculator.
Fig. 3 is a flowchart (part 1) explaining an example of graph display processing performed by the scientific calculator according to the first embodiment.
Fig. 4 is a flowchart (part 2) explaining an example of the graph display processing performed by the scientific calculator according to the first embodiment.
Fig. 5A is a diagram illustrating an example of a screen for inputting a function formula.
Fig. 5B is a diagram explaining an example of a relationship between graphs of input function formulas and a graph display area.
Fig. 6A is a diagram explaining an example of screen transition in a case where a guide screen is displayed.
Fig. 6B is a diagram explaining an example of screen transition in a case where a guide screen is displayed.
Fig. 6C is a diagram explaining an example of screen transition in a case where a guide screen is displayed.
Fig. 6D is a diagram explaining an example of screen transition in a case where a guide screen is displayed.
Fig. 7 is a front view illustrating an exemplary external configuration of an electronic device according to a second embodiment.
Fig. 8 is a block diagram illustrating an exemplary hardware configuration of a computer.
Fig. 9 is a block diagram illustrating an exemplary configuration of a learning system using a communication network.

### Description of Embodiments

Hereinafter, embodiments of the present disclosure will be described in detail with reference to the drawings. In the present description, drawing a graph is intended to express a relationship between a variable (such as an x value) and a solution (such as a y value) in a function formula in a predetermined plane or space, and drawing and displaying a graph is intended to visualize and display, on a display unit 12, only the inside of a designated range of the predetermined plane or space in which the relationship between the variable and the solution in the function formula is expressed. Accordingly, "drawing and displaying a graph" and similar expressions in the following description include also a case where a part or the whole of the drawn graph is not displayed on the display unit. Note that the function formula in the present description includes a function formula of a constant function (zero-order function) such as y = 1 (y = 0 · x + 1).

### [First Embodiment]

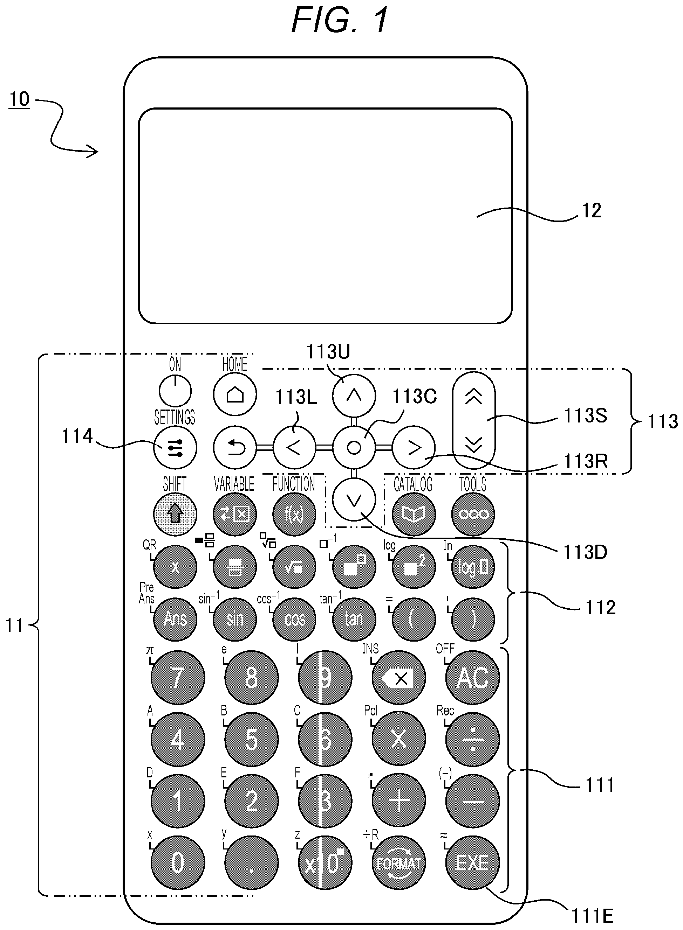

In a scientific calculator 10 depicted in Fig. 1, a key input unit 11, a display unit 12, and a battery power supply (not illustrated) are provided on one main surface of a device housing. The device housing can be sufficiently small in a distance (a dimension in a thickness direction) between the main surface on which the key input unit 11, the display unit 12, and the like are provided and a back surface of the main surface, as compared with dimensions in a longitudinal direction and a lateral direction of the main surface, and can have a small size enough to allow a user to grab the device housing with one hand and to operate the device housing with one hand. The scientific calculator 10 can be an example of an electronic device (graph display device) capable of drawing and displaying a graph of an input function formula.

The key input unit 11 includes a numerical value-arithmetic symbol key group 111 for, for example, inputting a numerical value or a numerical formula or instructing execution of calculation, a functional function key group 112 for inputting various functions, and a cursor key 113 for performing an operation of moving a cursor displayed on the display unit 12, an operation of selecting a data item, or the like.

The numerical value-arithmetic symbol key group 111 includes [0] to [9] (numerical values) keys, [+], [-], [×], [÷] (four arithmetic operators) keys, an [EXE] (execution) key 111E, an [AC] (clear) key, and the like. The functional function key group 112 includes an [x] (variable) key, a [□/□] (fraction) key, a [√□] (root) key, a [sin] (sine) key, a [cos] (cosine) key, a [tan] (tangent) key, and the like.

The cursor key 113 includes a [↑] (up) key 113U (first key), a [↓] (down) key 113D (second key), a [←] (left) key 113L (third key), a [→] (right) key 113R (fourth key), a [↑↓] (scroll) key 113S, and a [∘] (confirmation) key 113C. By providing the cursor key 113 to the right in terms of position on the front surface of the main body of the scientific calculator 10 in which the key input unit 11 is provided, the operability for users, the majority of which are right-handed, may be improved.

In addition, on the left side of the cursor key 113 in the key input unit 11, a key for turning on and off the power, a setting screen activation key 114 for displaying a setting screen relating to the working and operation of the scientific calculator 10, and the like are arranged. The display unit 12 can be a dot matrix type liquid crystal display unit or the like. Note that the external configuration of the scientific calculator 10, such as the number, array, and the like of keys of the key input unit 11, are not limited to the configuration depicted in Fig. 1.

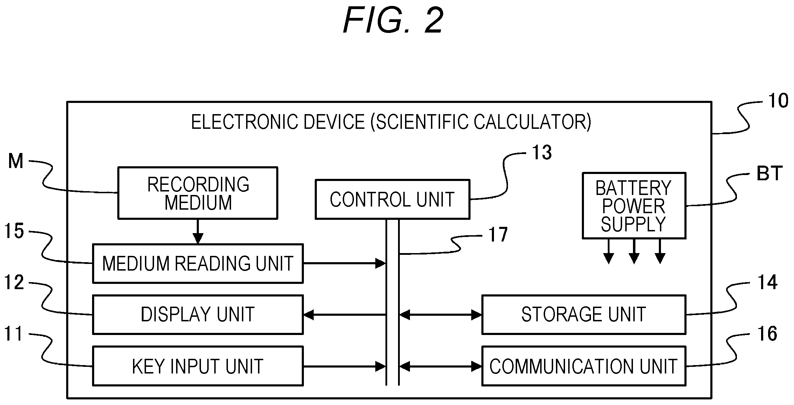

In Fig. 2, an electronic circuit in the scientific calculator 10 of the present embodiment includes the key input unit 11, the display unit 12, a battery power supply BT, a control unit 13, a storage unit 14, a medium reading unit 15, and a communication unit 16. The key input unit 11, the display unit 12, the control unit 13, the storage unit 14, the medium reading unit 15, and the communication unit 16 are interconnected via a bus 17. The key input unit 11, the display unit 12, the control unit 13, the storage unit 14, the medium reading unit 15, and the communication unit 16 are connected to the battery power supply BT through a power supply wire line (not illustrated) and work with power supplied from the battery power supply BT. The battery power supply BT may be constituted by a combination of a plurality of types of batteries (such as a combination of a solar cell and a button-shaped battery, a coin-shaped battery, or a cylindrical battery).

The control unit 13 controls the working of each unit of the circuit in accordance with a calculator control program stored in the storage unit 14 and executes various sorts of arithmetic processing according to a key input signal from the key input unit 11 and a reception signal received from the outside via the communication unit 16. The control unit 13 includes at least one processor such as a central processing unit (CPU). The communication unit 16 includes, for example, a wireless communication device that performs wireless communication with an external device in accordance with Bluetooth (registered trademark), Bluetooth Low Energy (registered trademark), or other short-range wireless communication standards. The communication unit 16 may have a terminal for connecting a dedicated or general-purpose transmission cable that can be used for communication with an external device.

The calculator control program may be stored in advance in the storage unit 14, or may be read and stored in the storage unit 14 from a portable recording medium M such as a memory card via the medium reading unit 15. The calculator control program may be downloaded and stored in the storage unit 14 from a web server on a communication network via the communication unit 16. The storage unit 14 includes a read only memory (ROM) and a random access memory (RAM) and can store a function formula or the like input by the user, as well as the calculator control program.

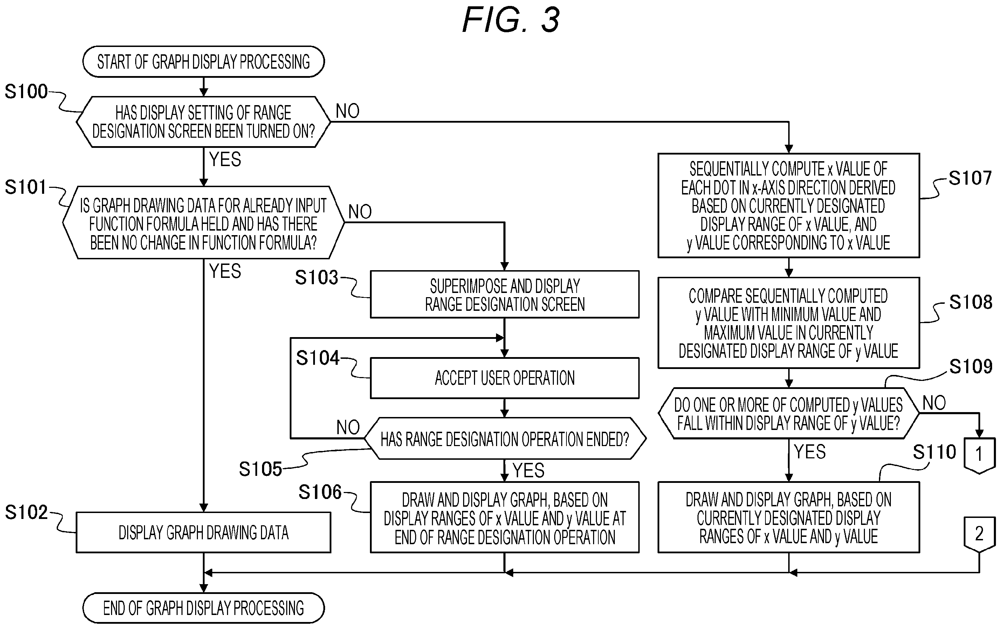

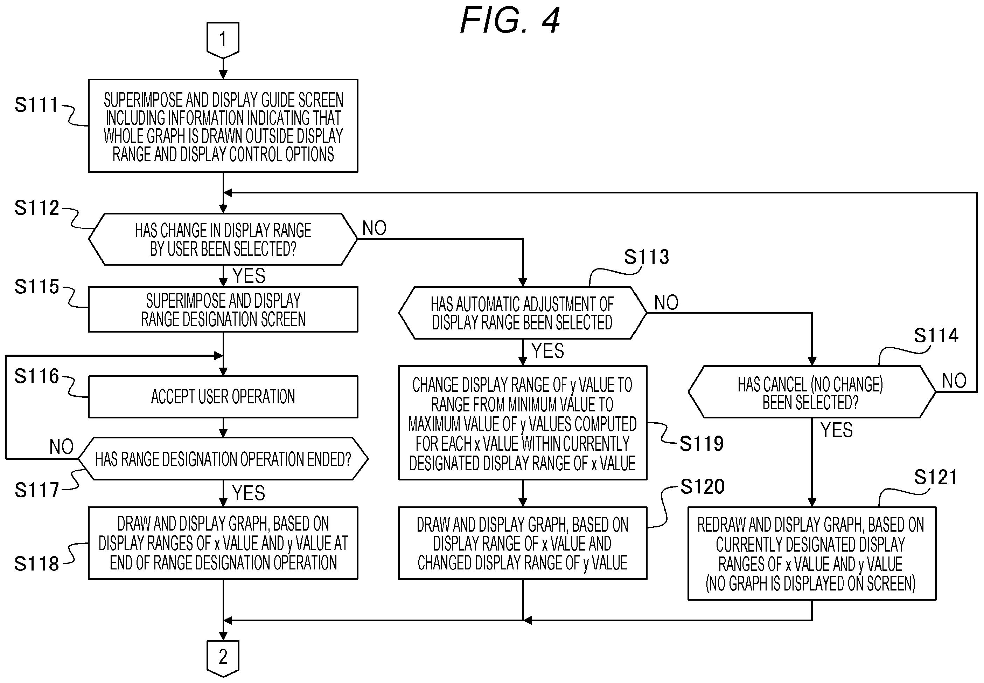

In the scientific calculator 10 as the electronic device configured as described above, the control unit 13 controls the working of each unit of the circuit in accordance with a command described in the calculator control program, and the software and the hardware work in cooperation, whereby diverse functions are implemented. For example, the scientific calculator 10 can draw a graph of a function formula input using the key input unit 11 or the like and display the drawn graph on the display unit 12. The scientific calculator 10 of the present embodiment carries out the graph display processing in line with the flowcharts depicted in Figs. 3 and 4 when drawing a graph of a function formula and displaying the drawn graph on the display unit 12. A command executed by the control unit 13 in the graph display processing to be described later with reference to Figs. 3 and 4 is included in the calculator control program.

In the scientific calculator 10, the components indicated by a plurality of blocks in Fig. 2 may be included in a single piece of hardware, or the component indicated by a single block in Fig. 2 may be constituted by a combination of a plurality of pieces of hardware. For example, the scientific calculator 10 may include a field programmable gate array (FPGA), an application specific integrated circuit (ASIC), or the like including a part or the whole of the control unit 13 and the storage unit 14.

Next, an example of the graph display processing performed by the scientific calculator 10 of the present embodiment will be described with reference to Figs. 3 and 4. For example, the scientific calculator 10 starts the graph display processing depicted in Figs. 3 and 4 when the user performs operations of selecting graph drawing from a menu screen and inputting a function formula and then consecutively performs an operation of instructing execution of graph drawing. The graph display processing starts from step S100 depicted in Fig. 3. The processing in each step included in the graph display processing is performed by the control unit 13 alone or in coordination with the key input unit 11, the display unit 12, the storage unit 14, and the like.

In step S100, the control unit 13 determines whether or not the display setting of a range designation screen has been turned on. The range designation screen is a screen for designating a range of the graph of the function formula to be displayed on the display unit 12. The range designation screen can be, for example, a screen on which a display range and a scale (division intervals) on the x axis (horizontal axis) and a display range and a scale (division intervals) on the y axis (vertical axis) can be designated. The determination in step S100 is made by the control unit 13, based on setting information stored in a predetermined memory area of the storage unit 14. The control unit 13 determines that the display setting has been turned on, in a case where it is set to display the range designation screen before drawing a graph (to be displayed on the display unit 12).

In a case where the control unit 13 determines that the display setting of the range designation screen has been turned on (step S100; YES), the control unit 13 determines whether or not graph drawing data for the already input function formula is held in a buffer memory of the storage unit 14 and there has been no change in the function formula since then (step S101). The determination in step S101 is made by the control unit 13, based on history information stored in a predetermined memory area of the storage unit 14. The graph drawing data held in the buffer memory can be, for example, image data displayed on the display unit 12 in the previous graph display processing and can include at least a part of the graph.

In a case where the control unit 13 determines that the graph drawing data is held and there has been no change in the function formula (step S101; YES), the control unit 13 reads the held graph drawing data from the storage unit 14 to display the read graph drawing data on the display unit 12 (step S102) and ends the graph display processing. In this manner, even in a case where the display setting of the range designation screen has been turned on (step S100; YES), the held graph drawing data is displayed on the display unit 12 without displaying the range designation screen in a case where it is determined that drawing data of a function formula whose graph is to be drawn is held (step S101; YES). The graph drawing data displayed on the display unit 12 can include, for example, a part of the graph within at least a partial range of the display range of the x value. For this reason, in a case where the drawing data of the function formula whose graph is to be drawn is held, the display of the range designation screen, the processing of changing the display ranges of the x value and the y value, and the like can be omitted, and labor and time for the user operation can be saved.

In a case where the control unit 13 determines that the graph drawing data is not held or that there is a change in the function formula (step S101; NO), the control unit 13 superimposes and displays the range designation screen on the display unit 12 (step S103). Thereafter, the control unit 13 accepts a user operation on the range designation screen using the key input unit 11 (step S104) and waits for the end of the range designation operation (step S105). In step S104, in a case where the accepted operation is an operation of changing any value of the display range and scale of the x value and the display range and scale of the y value, the control unit 13 changes the corresponding value. In this case, the control unit 13 determines that the range designation operation has not ended (step S105; NO) and waits for a next user operation. When determining that the range designation operation has ended (step S105; YES), the control unit 13 draws a graph, based on the display ranges of the x value and the y value at the end of the range designation operation, to display the drawn graph on the display unit 12 (step S106) and ends the graph display processing. In step S106, based on, for example, the display range of the x value at the end of the range designation operation (that is, at present) and the number of dots of the graph display area in an x-axis direction on the display unit 12, the control unit 13 derives the x value of each dot in the x-axis direction. In addition, based on the display range of the y value at the end of the range designation operation and the number of dots of the graph display area in a y-axis direction on the display unit 12, the control unit 13 derives the range of the y value of each dot in the y-axis direction. Thereafter, the control unit 13 inputs the derived x value of each dot to the function formula to sequentially compute the y value and draws, on an xy plane, a graph expressing a relationship between the x value input to the function formula and the y value that is a solution. At this time, the control unit 13 displays, on the display unit 12, only the inside of an area of the xy plane on which the graph is drawn specified by the display ranges of the x value and the y value at the end of the range designation operation.

In this manner, in a case where the display setting of the range designation screen has been turned on (step S100; YES), the user is allowed to designate the display ranges of the x value and the y value through the range designation screen before the graph of the input function formula is displayed on the display unit 12 in a case where it is determined that drawing data of the function formula whose graph is to be drawn is not held (step S101; NO). That is, before the graph is displayed, the user is allowed to check whether or not the graph is displayed on the display unit 12, based on the currently designated display ranges of the x value and the y value, and to change the display ranges of the x value and the y value such that the graph is displayed.

On the other hand, in a case where the control unit 13 determines that the display setting of the range designation screen has been turned off (step S100; NO), next, the control unit 13 sequentially computes the y value corresponding to the x value of each dot in the x-axis direction derived based on the currently designated display range of the x value (step S 107). In step S107, the control unit 13 computes the x value corresponding to each dot in the x-axis direction within the graph display range, based on the number of dots of the graph display range of the display unit 12 in the x-axis direction, and the minimum value and the maximum value of the x value designated through the range designation screen. In addition, in step S107, the control unit 13 sequentially computes, as the y value, a solution obtained by substituting the computed x value corresponding to each dot into the function formula. As a method for computing the x value and the y value in step S107, for example, a well-known computation method in a graph drawing function of a scientific calculator can be applied, and the method is not limited to a particular method.

Subsequently, the control unit 13 compares the y value sequentially computed in step S107 with the minimum value and the maximum value in the currently designated display range of the y value (step S108). Specifically, it is determined whether or not each of the y values sequentially computed in step S 107 is equal to or more than the minimum value and equal to or less than the maximum value of the y value in the currently designated display range of the y value, and the number of y values equal to or more than the minimum value but equal to or less than the maximum value of the y value in the currently designated display range of the y value, among the sequentially computed y values, is counted and held.

After step S108, the control unit 13 determines whether or not one or more of the y values computed in step S107 fall within the currently designated display range of the y value (step S109). In a case where the control unit 13 determines that one or more of the computed y values fall within the display range of the y value (step S109; YES), the control unit 13 draws a graph, based on the currently designated display ranges of the x value and the y value to display the drawn graph on the display unit 12 (step S110) and ends the graph display processing.

On the other hand, in a case where the control unit 13 determines that all of the computed y values fall outside the display range of the y value (step S109; NO), the control unit 13 performs the processing in step S111 and the subsequent processing depicted in Fig. 4. In step S111, the control unit 13 superimposes and displays, on the display unit 12, a guide screen (subwindow) including information indicating that the graph is drawn outside the display range and display control options. In the control unit 13 that performs the processing depicted in Fig. 4, the display control options include first display control contents for controlling the display range by accepting a change in the display range through a user operation, second display control contents for automatically adjusting the display range such that the graph drawn based on the y values computed in step S107 is displayed, and third display control contents for displaying the graph without changing the display range. After displaying the guide screen in step S111, the control unit 13 waits for any one of the first display control contents (a change of the display range by the user), the second display control contents (automatic adjustment of the display range), and the third display control contents (cancel) on the guide screen to be selected. For example, as illustrated in Fig. 4, until any one of the first display control contents, the second display control contents, and the third display control contents on the guide screen is selected, the control unit 13 repeats determination as to whether or not the first display control contents have been selected (step S112), determination as to whether or not the second display control contents have been selected (step S113), and determination as to whether or not the third display control contents have been selected (step S114) in this order (a loop of step S112; NO, step S113; NO, and step S114; NO is repeated).

When determining that the first display control contents have been selected (step S112; YES), the control unit 13 superimposes and displays the range designation screen on the display unit 12 (step S115). Thereafter, the control unit 13 accepts a user operation on the range designation screen using the key input unit 11 (step S116) and waits for the end of the range designation operation (step S117). In a case where the control unit 13 determines in step S116 that the accepted operation is an operation of changing any value of the display range and scale of the x value and the display range and scale of the y value, the control unit 13 changes the corresponding value. Thereafter, the control unit 13 determines whether or not the range designation operation has ended (step S117) and, in a case where the control unit 13 determines that the range designation operation has not ended (step S117; NO), waits for a next user operation. Meanwhile, when determining that the range designation operation has ended (step S117; YES), the control unit 13 draws a graph, based on the display ranges of the x value and the y value at the end of the range designation operation, to display the drawn graph on the display unit 12 (step S118) and ends the graph display processing. The processing in steps S115 to S118 may be, for example, the same or similar processing to the processing in steps S103 to S106 described above with reference to Fig. 3. In a case where the user has selected the first display control contents, the user is allowed to consider how to designate (change) the display ranges of the x value and the y value in order to display the graph drawn outside the display range on the display unit 12.

When determining that the second display control contents have been selected (step S113; YES), the control unit 13 changes the display range according to the range of a computed numerical value corresponding to the variable. Specifically, the display range of the y value is changed to a range from the minimum value to the maximum value of the y values computed for each x value within the currently designated display range of the x value (step S119). In step S119, for example, the control unit 13 extracts the minimum value and the maximum value from among the y values computed in step S107 and changes the minimum value and the maximum value of the y value designating the display range of the y value to the extracted minimum value and maximum value. Thereafter, the control unit 13 draws a graph, based on the display range of the x value and the changed display range of the y value to display the drawn graph on the display unit 12 (step S120) and ends the graph display processing. In a case where the user has selected the second display control contents, the user can save the labor and time for the operation for displaying the graph drawn outside the display range on the display unit 12.

When determining that the third display control contents have been selected (step S114; YES), the control unit 13 redraws the graph, based on the currently designated display ranges of the x value and the y value, to display the redrawn graph on the display unit 12 (step S121) and ends the graph display processing. That is, in a case where it is determined that the third display control contents have been selected, the graph is not displayed on the screen of the display unit 12 (within the graph display area). Note that, even in a case where the control unit 13 determines that the third display control contents have been selected, the control unit 13 can display the graph on the display unit 12 by detecting a user operation such as an operation on the cursor key 113, an operation of changing the display range through the range designation screen, or the like.

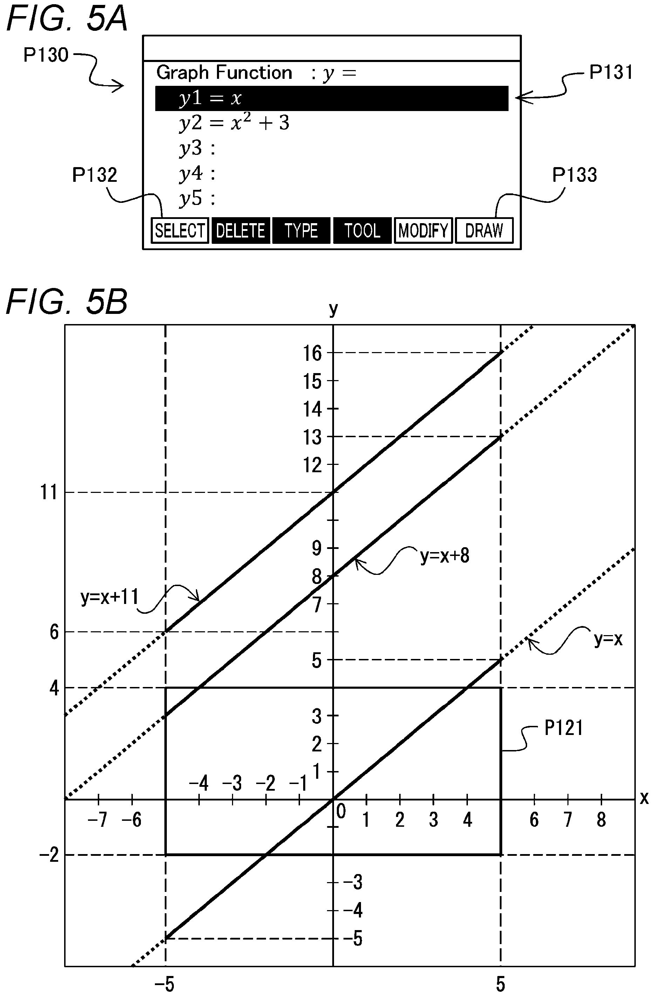

Fig. 5A illustrates an example of a screen P130 for inputting a function formula having the x value as a variable and the y value as a solution. Fig. 5B illustrates an example of a relationship between graphs drawn on the xy plane and a graph display area P121 for some function formulas. The graph display area P121 is an area of the xy plane on which the graph is drawn to be displayed on the display unit 12 and is specified by the display ranges of the x value and the y value on the range designation screen.

In the screen P130 depicted in Fig. 5A, two function formulas of y1 = x and y2 = x2 + 3 are input as an example of function formulas having the y value as a solution. The method for inputting the function formula is not limited to a particular method. For example, the user of the scientific calculator 10 can select one of five function formula input portions "y1" to "y5" displayed on the screen P130 by operating the cursor key 113. The function formula input portion being selected is displayed differently from the other function formula input portions (displayed reversed). In the screen P130 in Fig. 5A, a function formula input portion P131 to which the function formula y1 = x has been input is selected. When a function formula input portion is selected and, for example, a "SELECT" button P132 displayed at the lower left of the screen P130 is pressed, the function formula can be input to the function formula input portion being selected. In addition, when a function formula input portion is selected and, for example, a "DRAW" button P133 displayed at the lower right of the screen P130 is pressed, a graph of the function formula input to the function formula input portion being selected can be drawn and displayed on the display unit 12. The display unit 12 is not limited to displaying a graph of one function formula and, for example, may be capable of displaying graphs of two or more function formulas in an overlapping manner.

For example, the graph of the function formula "y1 = x" in the screen P130 illustrated in Fig. 5A is drawn, and the graph of "y = x" is drawn in the corresponding section in the x-axis direction. In Fig. 5B, the graph display area P121 is illustrated in an overlapping manner on a rectangular partial plane of -8 ≤ x ≤ 9 and -6 ≤ y ≤ 17 of the xy plane. The graph display area P121 has a rectangular area of -5 ≤ x ≤ 5 and -2 ≤ y ≤ 4.

At this time, the graph of the function formula y = x drawn on the xy plane by the scientific calculator 10 has, for example, only the section indicated by the solid line in Fig. 5B. In addition, the scientific calculator 10 displays only the graph display area P121 of the xy plane on the display unit 12. Therefore, in the example illustrated in Fig. 5B, only the portion of -2 ≤ x ≤ 4 of the graph of the function formula y = x drawn on the xy plane is displayed on the display unit 12. In addition, in a case where the graph of the function formula y = x + 8 is drawn and displayed, when the graph display area P121 has a rectangular area of -5 ≤ x ≤ 5 and -2 ≤ y ≤ 4, only the portion of -5 ≤ x ≤ 4 of the graph of the function formula y = x + 8 is displayed on the display unit 12, and a part of the graph of the function formula y = x + 8 is displayed on the display unit 12 at the upper left end of the graph display area P121.

Furthermore, in a case where the graph of the function formula y = x + 11 is drawn and displayed, when the graph display area P121 has a rectangular area of -5 ≤ x ≤ 5 and -2 ≤ y ≤ 4, the solutions y within the range of -5 ≤ x ≤ 5 take 6 ≤ y ≤ 16, and the whole graph of the function formula y = x + 11 is not displayed in the graph display area P121 on the display unit 12. In this manner, when the graph of the input function formula is drawn and displayed, if all of the y values (solutions of the function formula) corresponding to each x value (variable) within the display range of the x value fall outside the display range of the y value, the whole graph of the function formula may sometimes not be displayed on the display unit 12 (within the graph display area P121).

In this manner, in a case where the graph of the above-described function formula y = x + 8 is drawn and displayed, the user can understand how to change the graph display area P121, based on the position of the displayed portion in the graph display area P121 (that is, how to designate the display ranges of the x value and the y value). Meanwhile, in a case where the graph of the above-described function formula y = x + 11 is drawn and displayed, the whole graph is not displayed within the graph display area P121. Therefore, the user may have to check whether there is an error in the input function formula and the graph is not displayed or whether the whole graph drawn on the xy plane passes outside the graph display area P121. In addition, in a case where the whole graph drawn on the xy plane passes outside the graph display area P121, the user may have to consider how to change the graph display area P121 (that is, how to designate the display ranges of the x value and the y value) to display the graph. The user may also have to take into account a possible case that the graph is not be displayed in the graph display area P121 because the processing load of computing the y value increases and long time is required to display the drawn graph on the display unit 12.

On the other hand, in the scientific calculator 10 of the present embodiment, as described above with reference to Figs. 3 and 4, in a case where the control unit 13 determines that all of the computed y values fall outside the display range of the y value (step S109; NO), the guide screen including information indicating that the whole graph is drawn outside the display range is displayed on the display unit 12 (step S111). By displaying this guide screen, the user of the scientific calculator 10 of the present embodiment can easily know that, with the currently designated display ranges of the x value and the y value maintained, the whole graph drawn on the xy plane passes outside the graph display area P121, in other words, that the display range of at least one of the x value and the y value is supposed to be changed in order to display the graph.

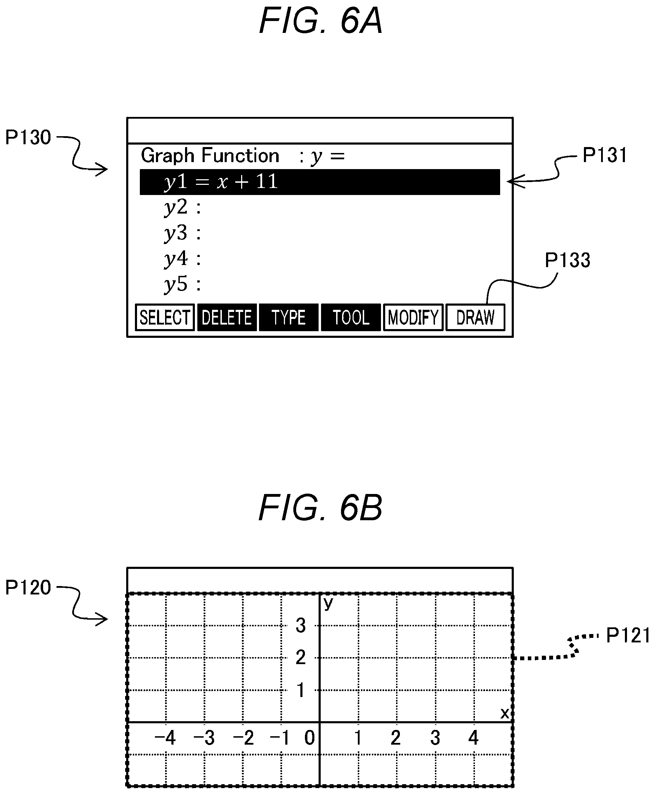

Next, a specific example will be described with reference to Figs. 6A to 6D. In the following description, it is assumed that the display setting of the range designation screen is in a turned-off state, and the display ranges of the x value and the y value designated through the range designation screen at the start of the graph display processing are -5 ≤ x ≤ 5 and -2 ≤ y ≤ 4. In the screen P130 depicted in Fig. 6A, the function formula "y1 = x + 11" has been input to the function formula input portion. When the user of the scientific calculator 10 performs an operation of pressing the "DRAW" button P113, the control unit 13 performs the graph display processing described above with reference to Figs. 3 and 4 in order to draw and display the graph of the function formula "y = x + 11" on the display unit 12. At this time, when the graph display area P121 has -5 ≤ x ≤ 5 and -2 ≤ y ≤ 4, the control unit 13 displays, for example, a screen P120 in Fig. 6B on the display unit 12 and substitutes the x values corresponding to each dot in the x-axis direction within the graph display area P121 into the function formula "y = x + 11" to sequentially compute the y values (solutions) (step S107). Thereafter, the control unit 13 compares the computed y values with the currently designated display range (the minimum value and the maximum value) of the y value (step S108).

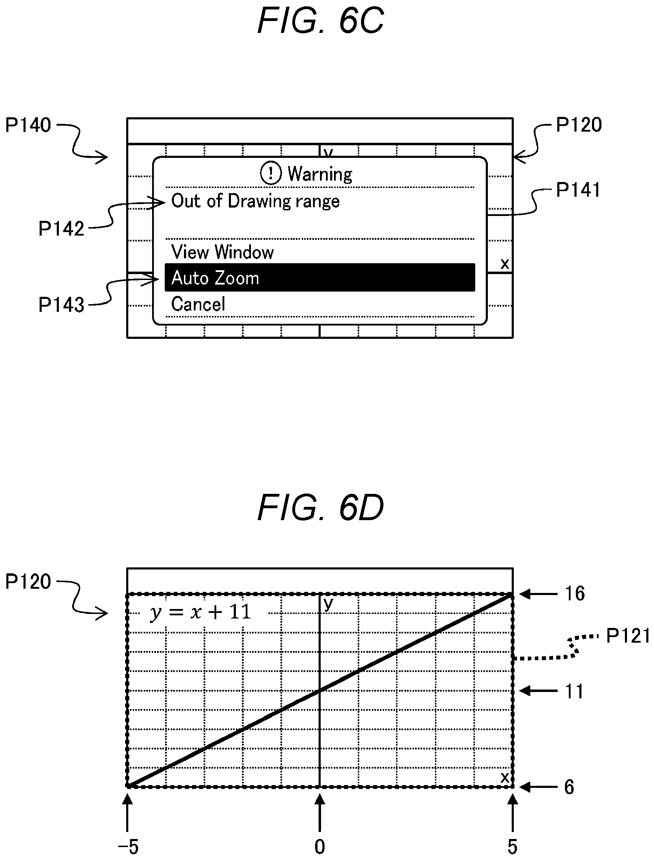

In the depicted case, as described above with reference to Fig. 5B, all of the computed y values fall outside the currently designated display range of the y value, and the whole graph is not displayed (step S109; NO). Therefore, for example, the control unit 13 displays, on the display unit 12, a screen P140 including a guide screen P141 arranged in front of the screen P120 on which the graph is displayed so as to overlap the screen P120, as illustrated in Fig. 6C (step S111). By displaying the guide screen P141 so as to overlap the screen P120 on which the graph is displayed, the user can grasp that the reason why the graph is not displayed is not the processing delay, for example. The guide screen P141 includes a message P142 for notifying the user that the graph of the function formula "y = x + 11" is drawn outside the graph display area P121, and options of display control contents. On the guide screen P141 in Fig. 6C, three items of "View Window" (first display control contents) for changing the graph display area P121 through a user operation using the range designation screen P110, "Auto Zoom" (second display control contents) for automatically changing the graph display area P121 based on the computed y values, and "Cancel" (third display control contents) for not changing the graph display area P121 are displayed as options of the display control contents.

The user can select any one of "View Window", "Auto Zoom", and "Cancel" in the guide screen P141. In a case where "View Window" has been selected (step S112; YES), the control unit 13 superimposes and displays the range designation screen on top of the screen P120 (step S115) and accepts a change in the display ranges of the x value and the y value (step S116). Then, when instructed by the user to draw a graph, the control unit 13 determines that the range designation operation has ended (step S117). The graph display area P121 is changed based on the display ranges of the x value and the y value at the end of the range designation operation, and the graph is drawn and displayed (step S118).

In a case where the user has selected a selection item P143 of "Auto Zoom" (step S113; YES), the control unit 13 changes the graph display area P121 such that the minimum value of the computed y values is assigned as the minimum value of the display range of the y value and the maximum value of the computed y values is assigned as the maximum value of the display range of the y value (step S119). Thereafter, the control unit 13 draws and displays a graph, based on the display range of the x value and the changed display range of the y value (step S120). The solution (y value) of the function formula y = x + 11 in -5 ≤ x ≤ 5 has a minimum value of 6 and a maximum value of 16. Therefore, the control unit 13 changes the display range of the y value in the graph display area P121 to 6 ≤ y ≤ 16 and draws and displays the graph of the function formula y = x + 11, as in the screen P120 in Fig. 6D.

Furthermore, in a case where the user has selected "Cancel" (step S114; YES), the control unit 13 hides the guide screen 141 and displays the screen P120 illustrated in Fig. 6B, that is, the screen on which no graph is displayed in the graph display area P121, again as the display on the display unit 12. In these circumstances, for example, by operating the cursor key 113 or pressing a predetermined key to display the range designation screen, the user can change the display range or the position in the xy plane of the graph display area P121 to display the graph.

As described above, according to the scientific calculator 10 of the present embodiment, when the whole graph of the input function formula passes outside the graph display area P121 and is not displayed on the display unit 12, the user can be notified of the reason (cause) why the graph is not displayed, by displaying the guide screen P141. In addition, by presenting the user, on the guide screen P141, with options of the coping method (display control contents) for causing the graph to be displayed, the user can easily know the reason why the graph is not displayed on the display unit 12 and a possible means taken to display the graph, which accordingly enables to reliably support the user to execute a technical task (use of the graph drawing function in the scientific calculator) with the interaction process between the user and the scientific calculator 10.

In addition, by providing a means for changing the display ranges of the x value and the y value through a user operation as a possible means taken to display the graph, the user can be given an opportunity to consider how to change the display ranges of the x value and the y value to display the graph and can learn the graph of the function formula more deeply. By also providing, as a possible means taken to display the graph, a means for automatically changing the display range of the y value to a range from the minimum value to the maximum value of the computed y values, the graph can be displayed on the display unit 12 with less labor and time. As described above, the interaction process between the user and the scientific calculator 10 can reliably support the user in executing a technical task (use of the graph drawing function in the scientific calculator).

Note that, in the present embodiment, the function formula having the value (x value) on the horizontal axis (x axis) of the graph as a variable and the value (y value) on the vertical axis (y axis) as a solution is exemplified, but the function formula is not limited thereto. The function formula is not limited to a linear function and may be a function formula of a quadratic or higher function or a constant function (zero-order function). The function formula is not limited to a univariate function formula and may be a function formula of two or more variables. The function formula may be a function formula having the value (y value) of the vertical axis (y axis) of the graph as a variable and the value (x value) of the horizontal axis (x axis) as a solution.

In addition, in a case where the display range of the y value is automatically changed, for example, only any one of the minimum value and the maximum value of the computed y values may be designated as an end value of the display range of the y value, and the display range (a value obtained by subtracting the minimum value from the maximum value) may be kept unchanged. For example, instead of the graph display area P121 depicted in Fig. 6D, the graph may be displayed in the graph display area P121 obtained by changing the display range of the y value to 6 ≤ y ≤ 12 or 10 ≤ y ≤ 16 from -2 ≤ y ≤ 4.

### [Second Embodiment]

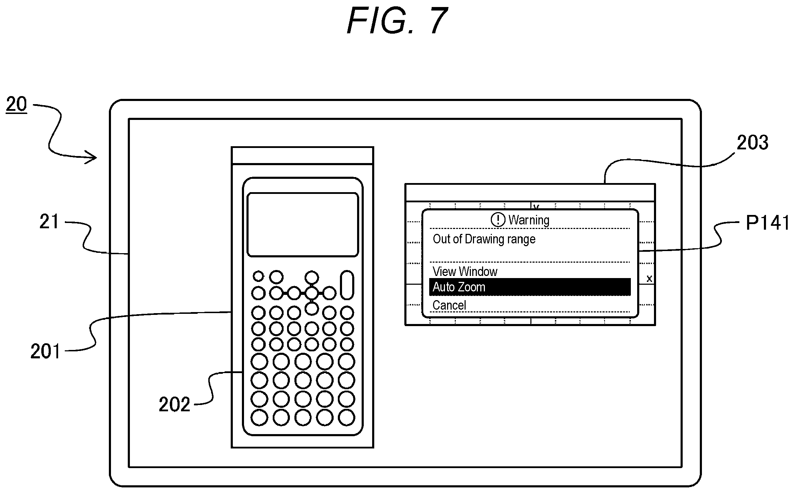

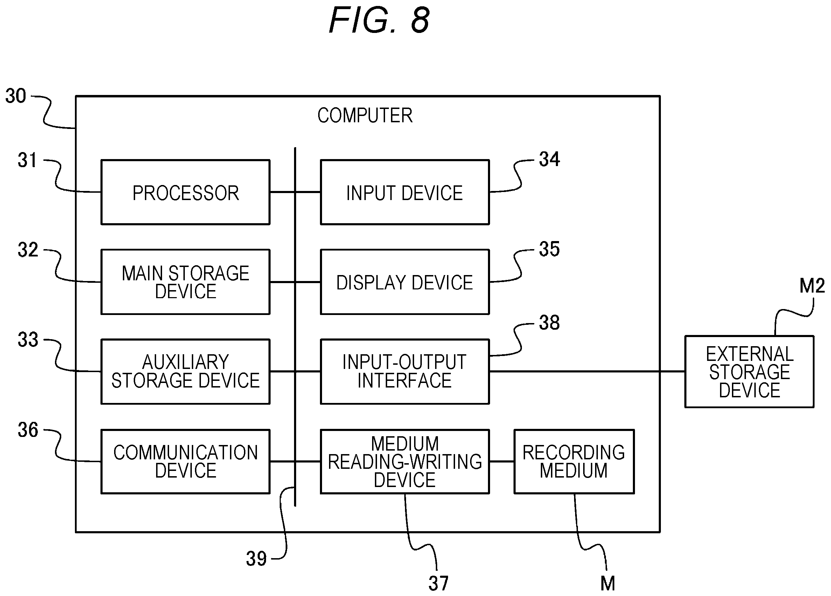

An electronic device 20 depicted in Fig. 7 includes a touch panel display 21 serving as both of an input unit and a display unit, as in a tablet computer, a smartphone, or the like. The electronic device 20 of the present embodiment can be a computer 30 depicted in Fig. 8, or can include the computer 30, or can be another information processing device providing a function equivalent to that of the computer 30, and includes a processor 31, a main storage device 32, an auxiliary storage device 33, an input device 34, a display device 35, a communication device 36, a medium reading-writing device 37, and an input-output interface 38, where these hardware elements are interconnected by a bus 39 so as to be able to execute the calculator control program (emulator) including commands relating to the graph display processing described above with reference to Figs. 3 and 4.

For example, the processor 31 causes the computer 30 to work as the scientific calculator 10 according to the first embodiment, by executing the calculator control program including a program portion corresponding to the graph display processing described above with reference to Figs. 3 and 4. The processor 31 is allowed to include one or more CPUs and other processors. The main storage device 32 and the auxiliary storage device 33 store a program executed by the processor 31, data referred to and data generated by the processor 31 executing the program, and the like. The input device 34 can be an input device (such as a keyboard or a mouse, for example) that can be used as the key input unit 11 of the scientific calculator 10 according to the first embodiment. The display device 35 can be a dot matrix type display device that can be used as the display unit 12 of the scientific calculator 10 according to the first embodiment.

The communication device 36 can be a wireless communication device that can be used as the communication unit 16 of the scientific calculator 10 according to the first embodiment or a communication device having a terminal to which a communication cable can be connected. The medium reading-writing device 37 corresponds to the medium reading unit 15 of the scientific calculator 10 according to the first embodiment. The input-output interface 38 is, for example, a hardware interface having a terminal to which a transmission cable such as a universal serial bus (USB) cable can be connected. Note that some of the hardware elements exemplified above may be omitted from the computer 30 in Fig. 8 within an allowable range for the computer 30 to work as a scientific calculator.

As illustrated in Fig. 7, the electronic device 20 that can be the computer 30 can display, on the touch panel display 21, a calculator window 201 including a scientific calculator image 202. The scientific calculator image 202 includes a key input unit corresponding to the key input unit 11 of the scientific calculator 10, in which a plurality of buttons (keys) is arranged. When an operation of pressing a button of the key input unit of the scientific calculator image 202 is performed, the function allocated to the pressed button is executed, and the execution result is displayed on the touch panel display 21. That is, a user of the electronic device 20 can use the electronic device 20 as a scientific calculator, by performing an operation of pressing a button (key) arranged in the key input unit of the scientific calculator image 202 in the calculator window 201.

The electronic device 20 of the present embodiment is not limited to one that can be caused to work alone as a scientific calculator and may be one that can be caused to function as a scientific calculator by using a web system connected via a communication network such as the Internet.

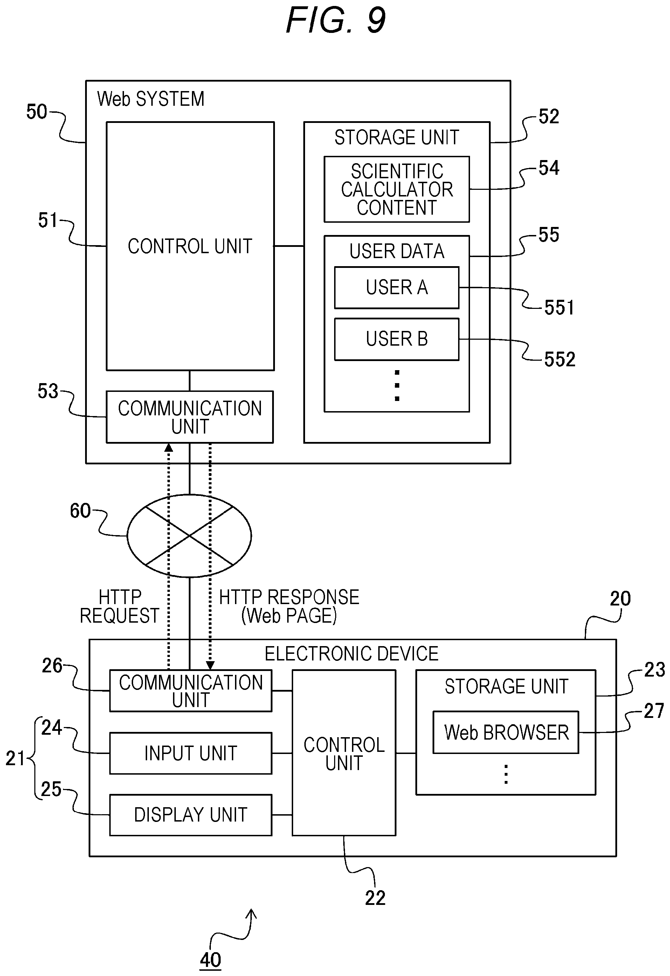

Fig. 9 is a block diagram illustrating an exemplary configuration of a learning system using a communication network. A learning system 40 depicted in Fig. 9 can be, for example, a system designed for children, students, undergraduates, and other persons who perform learning using a scientific calculator, and includes the electronic device 20 and a web system 50. The learning system 40 may include two or more electronic devices 20. The electronic device 20 includes a control unit 22, a storage unit 23, an input unit 24, a display unit 25, and a communication unit 26. The input unit 24 and the display unit 25 may be provided as the touch panel display 21 in the electronic device 20. The control unit 22 executes a program on a web browser 27 stored in the storage unit 23 to generate a hypertext transfer protocol (HTTP) request to be transmitted to the web system 50, to display a web page according to an HTTP response from the web system 50, and the like. The communication unit 26 performs, for example, wireless or wired communication with a communication device connected to a communication network 60 such as the Internet and connects the electronic device 20 to the communication network 60.

The web system 50 is a system that provides the functions of the scientific calculator, using the communication network 60, and includes a control unit 51, a storage unit 52, and a communication unit 53. The control unit 51 of the web system 50 controls the working of the web system 50. For example, the control unit 51 performs processing according to an HTTP request from the electronic device 20 and generates a web page according to a result of the processing to transmit the generated web page to the electronic device 20, as an HTTP response. The processing according to the HTTP request can be, for example, processing of generating a web page including the scientific calculator image 202 (see Fig. 7), processing of generating a web page for drawing and displaying a graph of a function formula on the electronic device 20, processing of generating a web page for displaying the guide screen P141 on the electronic device 20, or the like. The storage unit 52 stores scientific calculator content 54, user data 55, other data (not illustrated), a program, and the like to be provided to the electronic device 20 via the communication network 60. The scientific calculator content 54 can be a web application that enables the electronic device 20 to be used as a scientific calculator and includes the calculator control program (emulator). User data 551 of a user A includes, for example, information such as identification information on the user A, setting of the scientific calculator, and a function formula created by the user A. User data 552 of a user B includes, for example, information such as identification information on the user B, setting of the scientific calculator, and a function formula created by the user B. The setting of the scientific calculator includes turning on or off of the display setting of the range designation screen described above and setting of the display ranges of the x value and the y value on the range designation screen, or the like. The communication unit 53 performs wireless or wired communication with a communication device connected to the communication network 60 and connects the web system 50 to the communication network 60.

In the learning system 40 depicted in Fig. 9, it is sufficient that the web system 50 can calculate the function formula and the electronic device 20 can execute the web browser 27. Therefore, for example, the electronic device 20 can be avoided from being caused to perform high-load processing such as drawing and displaying a graph of a complicated function formula.

## Claims

1. An electronic device (20) comprising
a processor that generates a graph of a function formula including at least one variable in response to an input of a numerical value corresponding to a drawing range of the graph to the one variable of the function formula, and superimposes and displays, on a display unit (12), a guide screen (P141) including information indicating that the whole graph is drawn outside the display range and including two options for displaying the drawn graph within the display unit (12), in response to determining that the whole generated graph in the drawing range passes outside a display range designated in advance on the display unit (12),
**characterized in that**
the two options include: (i) first display control contents for changing the display range according to a user operation, and (ii) second display control contents for changing the display range according to a range of a numerical value set in the one variable,
wherein when the first display control contents is executed, the processor changes the display range according to a user operation and then draws and displays the graph based on the changed range; and
wherein when the second display control contents is executed, the processor automatically changes the display range according to a range of a numerical value set in the one variable and then draws and displays the graph based on the changed range.

2. The electronic device (20) according to claim 1, **characterized in that** the guide screen (P141) is smaller than the display range, and at least a part of the display range is displayed on the display unit (12) together with the guide screen (P141).

3. The electronic device (20) according to claim 1, **characterized in that** the processor further displays, on the display unit (12), a window including a scientific calculator screen for inputting the function formula, and draws the graph of the function formula input through a user operation on the scientific calculator screen to display the drawn graph on the display unit (12).

4. A display control method comprising executing, by an electronic device (20), processing of,
generating a graph of a function formula including at least one variable in response to an input of a numerical value corresponding to a drawing range of the graph to the one variable of the function formula, and superimposing and displaying, on a display unit (12), a guide screen (P141) including information indicating that the whole graph is drawn outside the display range and including two options for displaying the drawn graph within the display unit (12), in response to determining that the whole generated graph in the drawing range passes outside a display range designated in advance on the display unit (12),
**characterized in that**
the two options include: (i) first display control contents for changing the display range according to a user operation, and (ii) second display control contents for changing the display range according to a range of a numerical value set in the one variable,
wherein when the first display control contents is executed, changing the display range according to a user operation and then drawing and displaying the graph based on the changed range; and
wherein when the second display control contents is executed, automatically changing the display range according to a range of a numerical value set in the one variable and then drawing and displaying the graph based on the changed range.

5. The display control method according to claim 4, **characterized in that** the guide screen (P141) is smaller than the display range, and at least a part of the display range is displayed on the display unit (12) together with the guide screen (P141).

6. The display control method according to claim 4, further comprising executing processing of further displaying, on the display unit (12), a window including a scientific calculator screen for inputting the function formula, and drawing the graph of the function formula input through a user operation on the scientific calculator screen to display the drawn graph on the display unit (12).

7. A computer program comprising instructions which, when executed by a computer, cause the computer to:
generate a graph of a function formula including at least one variable in response to an input of a numerical value corresponding to a drawing range of the graph to the one variable of the function formula, and superimpose and display, on a display unit (12), a guide screen (P141) including information indicating that the whole graph is drawn outside the display range and including two options for displaying the drawn graph within the display unit (12), in response to determining that the whole generated graph in the drawing range passes outside a display range designated in advance on the display unit (12),
**characterized in that**
the two options include: (i) first display control contents for changing the display range according to a user operation, and (ii) second display control contents for changing the display range according to a range of a numerical value set in the one variable,
wherein when the first display control contents is executed, change the display range according to a user operation and then draw and display the graph based on the changed range; and
wherein when the second display control contents is executed, automatically change the display range according to a range of a numerical value set in the one variable and then draw and display the graph based on the changed range.

8. The computer program according to claim 7, **characterized in that** the guide screen (P141) is smaller than the display range, and at least a part of the display range is displayed on the display unit (12) together with the guide screen (P141).

9. The computer program according to claim 7, wherein the instructions further cause the computer to:
display, on the display unit (12), a window including a scientific calculator screen for inputting the function formula, and
draw the graph of the function formula input through a user operation on the scientific calculator screen to display the drawn graph on the display unit (12).

## Patentansprüche

1. Elektronische Vorrichtung (20), umfassend
einen Prozessor, der einen Graphen einer Funktionsformel einschließlich mindestens einer Variablen als Reaktion auf eine Eingabe eines numerischen Werts erzeugt, der einem Zeichnungsbereich des Graphen für die eine Variable der Funktionsformel entspricht, und auf einer Anzeigeeinheit (12) einen Führungsbildschirm (P141) überlagert und anzeigt, einschließlich Informationen, die anzeigen, dass der gesamte Graph außerhalb des Anzeigebereichs gezeichnet wird, und einschließlich zweier Optionen zum Anzeigen des gezeichneten Graphen innerhalb der Anzeigeeinheit (12), als Reaktion auf das Bestimmen, dass der gesamte erzeugte Graph in dem Zeichenbereich außerhalb eines zuvor auf der Anzeigeeinheit (12) bezeichneten Anzeigebereichs verläuft, **dadurch gekennzeichnet, dass**
die zwei Optionen einschließen: (i) erste Anzeigesteuerungsinhalte zum Ändern des Anzeigebereichs entsprechend einer Benutzeroperation und (ii) zweite Anzeigesteuerungsinhalte zum Ändern des Anzeigebereichs entsprechend einem in der einen Variablen festgelegten Bereich von numerischen Werten,
wobei, wenn die ersten Anzeigesteuerungsinhalte ausgeführt werden, der Prozessor den Anzeigebereich entsprechend einer Benutzeroperation ändert und dann den Graphen basierend auf dem geänderten Bereich zeichnet und anzeigt; und
wobei, wenn die zweiten Anzeigesteuerungsinhalte ausgeführt werden, der Prozessor den Anzeigebereich automatisch entsprechend einem in der einen Variablen festgelegten Bereich eines numerischen Werts ändert und dann den Graphen basierend auf dem geänderten Bereich zeichnet und anzeigt.

2. Elektronische Vorrichtung (20) nach Anspruch 1, **dadurch gekennzeichnet, dass** der Führungsbildschirm (P141) kleiner als der Anzeigebereich ist und mindestens ein Teil des Anzeigebereichs zusammen mit dem Führungsbildschirm (P141) auf der Anzeigeeinheit (12) angezeigt wird.

3. Elektronische Vorrichtung (20) nach Anspruch 1, **dadurch gekennzeichnet, dass** der Prozessor auf der Anzeigeeinheit (12) weiter ein Fenster einschließlich eines wissenschaftlichen Rechnerbildschirms zur Eingabe der Funktionsformel anzeigt und den Graphen der durch eine Benutzeroperation eingegebenen Funktionsformel auf den wissenschaftlichen Rechnerbildschirm zeichnet, um den gezeichneten Graphen auf der Anzeigeeinheit (12) anzuzeigen.

4. Anzeigesteuerungsverfahren, das die Ausführung einer Verarbeitung durch eine elektronische Vorrichtung (20) umfasst von
Erzeugen eines Graphen einer Funktionsformel einschließlich mindestens einer Variablen als Reaktion auf eine Eingabe eines numerischen Werts, der einem Zeichnungsbereich des Graphen für die eine Variable der Funktionsformel entspricht, und Überlagern und Anzeigen auf einer Anzeigeeinheit (12) eines Führungsbildschirms (P141) einschließlich Informationen, die anzeigen, dass der gesamte Graph außerhalb des Anzeigebereichs gezeichnet ist, und einschließlich zweier Optionen zum Anzeigen des gezeichneten Graphen innerhalb der Anzeigeeinheit (12), als Reaktion auf das Bestimmen, dass der gesamte erzeugte Graph in dem Zeichnungsbereich außerhalb eines zuvor auf der Anzeigeeinheit (12) bezeichneten Bereichs verläuft,
**dadurch gekennzeichnet, dass**
die zwei Optionen einschließen: (i) erste Anzeigesteuerungsinhalte zum Ändern des Anzeigebereichs entsprechend einer Benutzeroperation und (ii) zweite Anzeigesteuerungsinhalte zum Ändern des Anzeigebereichs entsprechend einem in der einen Variablen festgelegten Bereich von numerischen Werten,
wobei, wenn die ersten Anzeigesteuerungsinhalte ausgeführt werden, der Anzeigebereich entsprechend einer Benutzeroperation geändert und dann der Graph basierend auf dem geänderten Bereich gezeichnet und angezeigt wird; und
wobei, wenn die zweiten Anzeigesteuerungsinhalte ausgeführt werden, der Anzeigebereich automatisch entsprechend einem in der einen Variablen festgelegten Bereich eines numerischen Werts geändert und dann der Graph basierend auf dem geänderten Bereich gezeichnet und angezeigt wird.

5. Anzeigesteuerungsverfahren nach Anspruch 4, **dadurch gekennzeichnet, dass** der Führungsbildschirm (P141) kleiner als der Anzeigebereich ist und mindestens ein Teil des Anzeigebereichs zusammen mit dem Führungsbildschirm (P141) auf der Anzeigeeinheit (12) angezeigt wird.

6. Anzeigesteuerungsverfahren nach Anspruch 4, weiter umfassend die Ausführung einer Verarbeitung des weiteren Anzeigens eines Fensters einschließlich eines wissenschaftlichen Rechnerbildschirms zur Eingabe der Funktionsformel auf der Anzeigeeinheit (12) und des Zeichnens des Graphen der Funktionsformel, die durch eine Benutzeroperation eingegeben wird, auf den wissenschaftlichen Rechnerbildschirm, um den gezeichneten Graphen auf der Anzeigeeinheit (12) anzuzeigen.

7. Computerprogramm, das Anweisungen umfasst, die, wenn sie von einem Computer ausgeführt werden, den Computer veranlassen zum:
Erzeugen eines Graphen einer Funktionsformel einschließlich mindestens einer Variablen als Reaktion auf eine Eingabe eines numerischen Werts, der einem Zeichnungsbereich des Graphen für die eine Variable der Funktionsformel entspricht, und Überlagern und Anzeigen, auf einer Anzeigeeinheit (12), eines Führungsbildschirms (P141) einschließlich Informationen, die anzeigen, dass der gesamte Graph außerhalb des Anzeigebereichs gezeichnet ist, und einschließlich zweier Optionen zum Anzeigen des gezeichneten Graphen innerhalb der Anzeigeeinheit (12), als Reaktion auf ein Bestimmen, dass der gesamte erzeugte Graph in dem Zeichnungsbereich außerhalb eines zuvor auf der Anzeigeeinheit (12) bezeichneten Anzeigebereichs verläuft,
**dadurch gekennzeichnet, dass**
die zwei Optionen einschließen: (i) erste Anzeigesteuerungsinhalte zum Ändern des Anzeigebereichs entsprechend einer Benutzeroperation und (ii) zweite Anzeigesteuerungsinhalte zum Ändern des Anzeigebereichs entsprechend einem in der einen Variablen festgelegten Bereich eines numerischen Werts,
wobei, wenn die ersten Anzeigesteuerungsinhalte ausgeführt werden, der Anzeigebereich entsprechend einer Benutzeroperation geändert und dann der Graph basierend auf dem geänderten Bereich gezeichnet und angezeigt wird; und
wobei, wenn die zweiten Anzeigesteuerungsinhalte ausgeführt werden, der Anzeigebereich automatisch entsprechend einem in der einen Variablen festgelegten Bereich eines numerischen Werts geändert und dann der Graph basierend auf dem geänderten Bereich gezeichnet und angezeigt wird.

8. Computerprogramm nach Anspruch 7, **dadurch gekennzeichnet, dass** der Führungsbildschirm (P141) kleiner als der Anzeigebereich ist und mindestens ein Teil des Anzeigebereichs zusammen mit dem Führungsbildschirm (P141) auf der Anzeigeeinheit (12) angezeigt wird.

9. Computerprogramm nach Anspruch 7, wobei die Anweisungen den Computer weiter veranlassen zum:
Anzeigen eines Fensters einschließlich eines wissenschaftlichen Rechnerbildschirms zum Eingeben der Funktionsformel auf der Anzeigeeinheit (12), und
Zeichnen des Graphen der Funktionsformel, die durch eine Benutzeroperation eingegeben wird, auf den wissenschaftlichen Rechnerbildschirm, um den gezeichneten Graphen auf der Anzeigeeinheit (12) anzuzeigen.

## Revendications

1. Dispositif électronique (20) comprenant
un processeur qui génère un graphe d'une formule de fonction incluant au moins une variable en réponse à une entrée d'une valeur numérique correspondant à une plage de tracé du graphe pour ladite une variable de la formule de fonction, et superpose et affiche, sur une unité d'affichage (12), un écran guide (P141) incluant des informations indiquant que l'ensemble du graphe est tracé en dehors de la plage d'affichage et incluant deux options pour afficher à l'intérieur de l'unité d'affichage (12) le graphe tracé, en réponse à la détermination que l'ensemble du graphe généré dans la plage de tracé passe en dehors d'une plage d'affichage définie à l'avance sur l'unité d'affichage (12), **caractérisé en ce que**
les deux options incluent : (i) un premier contenu de commande d'affichage pour modifier la plage d'affichage conformément à une opération d'utilisateur, et (ii) un second contenu de commande d'affichage pour modifier la plage d'affichage conformément à une plage d'une valeur numérique définie dans ladite une variable,
où lorsque le premier contenu de commande d'affichage est exécuté, le processeur modifie la plage d'affichage conformément à une opération d'utilisateur et ensuite trace et affiche le graphe sur la base de la plage modifiée ; et
où lorsque le second contenu de commande d'affichage est exécuté, le processeur modifie automatiquement la plage d'affichage conformément à une plage d'une valeur numérique définie dans ladite une variable et ensuite trace et affiche le graphe sur la base de la plage modifiée.

2. Dispositif électronique (20) selon la revendication 1, **caractérisé en ce que** l'écran guide (P141) est plus petit que la plage d'affichage, et au moins une partie de la plage d'affichage est affichée sur l'unité d'affichage (12) conjointement avec l'écran guide (P141).

3. Dispositif électronique (20) selon la revendication 1, **caractérisé en ce que** le processeur affiche en outre, sur l'unité d'affichage (12), une fenêtre incluant un écran de calculatrice scientifique pour entrer la formule de fonction, et trace le graphe de la formule de fonction entrée par une opération d'utilisateur sur l'écran de calculatrice scientifique afin d'afficher sur l'unité d'affichage (12) le graphe tracé.

4. Procédé de commande d'affichage comprenant l'exécution, par un dispositif électronique (20), d'un processus consistant à
générer un graphe d'une formule de fonction incluant au moins une variable en réponse à une entrée d'une valeur numérique correspondant à une plage de tracé du graphe pour ladite une variable de la formule de fonction, et superposer et afficher, sur une unité d'affichage (12), un écran guide (P141) incluant des informations indiquant que l'ensemble du graphe est tracé en dehors de la plage d'affichage et incluant deux options pour afficher à l'intérieur de l'unité d'affichage (12) le graphe tracé, en réponse à la détermination que l'ensemble du graphe généré dans la plage de tracé passe en dehors d'une plage d'affichage définie à l'avance sur l'unité d'affichage (12),
**caractérisé en ce que**
les deux options incluent : (i) un premier contenu de commande d'affichage pour modifier la plage d'affichage conformément à une opération d'utilisateur, et (ii) un second contenu de commande d'affichage pour modifier la plage d'affichage conformément à une plage d'une valeur numérique définie dans ladite une variable,
où lorsque le premier contenu de commande d'affichage est exécuté, modifier la plage d'affichage conformément à une opération d'utilisateur et ensuite tracer et afficher le graphe sur la base de la plage modifiée ; et
où lorsque le second contenu de commande d'affichage est exécuté, modifier automatiquement la plage d'affichage conformément à une plage d'une valeur numérique définie dans ladite une variable et ensuite tracer et afficher le graphe sur la base de la plage modifiée.

5. Procédé de commande d'affichage selon la revendication 4, **caractérisé en ce que** l'écran guide (P141) est plus petit que la plage d'affichage, et au moins une partie de la plage d'affichage est affichée sur l'unité d'affichage (12) conjointement avec l'écran guide (P141).

6. Procédé de commande d'affichage selon la revendication 4, comprenant en outre l'exécution d'un processus consistant à afficher en outre, sur l'unité d'affichage (12), une fenêtre incluant un écran de calculatrice scientifique pour entrer la formule de fonction, et tracer le graphe de la formule de fonction entrée par une opération d'utilisateur sur l'écran de calculatrice scientifique afin d'afficher sur l'unité d'affichage (12) le graphe tracé.

7. Programme informatique comprenant des instructions qui, lorsqu'elles sont exécutées par un ordinateur, amènent l'ordinateur à :
générer un graphe d'une formule de fonction incluant au moins une variable en réponse à une entrée d'une valeur numérique correspondant à une plage de tracé du graphe pour ladite une variable de la formule de fonction, et superposer et afficher, sur une unité d'affichage (12), un écran guide (P141) incluant des informations indiquant que l'ensemble du graphe est tracé en dehors de la plage d'affichage et incluant deux options pour afficher à l'intérieur de l'unité d'affichage (12) le graphe tracé, en réponse à la détermination que l'ensemble du graphe généré dans la plage de tracé passe en dehors d'une plage d'affichage définie à l'avance sur l'unité d'affichage (12),
**caractérisé en ce que**
les deux options incluent : (i) un premier contenu de commande d'affichage pour modifier la plage d'affichage conformément à une opération d'utilisateur, et (ii) un second contenu de commande d'affichage pour modifier la plage d'affichage conformément à une plage d'une valeur numérique définie dans ladite une variable,
où lorsque le premier contenu de commande d'affichage est exécuté, modifier la plage d'affichage conformément à une opération d'utilisateur et ensuite tracer et afficher le graphe sur la base de la plage modifiée ; et
où lorsque le second contenu de commande d'affichage est exécuté, modifier automatiquement la plage d'affichage conformément à une plage d'une valeur numérique définie dans ladite une variable et ensuite tracer et afficher le graphe sur la base de la plage modifiée.

8. Programme informatique selon la revendication 7, **caractérisé en ce que** l'écran guide (P141) est plus petit que la plage d'affichage, et au moins une partie de la plage d'affichage est affichée sur l'unité d'affichage (12) conjointement avec l'écran guide (P141).

9. Programme informatique selon la revendication 7, dans lequel les instructions amènent en outre l'ordinateur à :
afficher, sur l'unité d'affichage (12), une fenêtre incluant un écran de calculatrice scientifique pour entrer la formule de fonction, et
tracer le graphe de la formule de fonction entrée par une opération d'utilisateur sur l'écran de calculatrice scientifique pour afficher sur l'unité d'affichage (12) le graphe tracé.
